(19) Europäisches Patentamt
European Patent Office
Office européen des brevets

(11) Veröffentlichungsnummer: **0 070 346**
**B1**

(12) # EUROPÄISCHE PATENTSCHRIFT

(45) Veröffentlichungstag der Patentschrift: **02.04.86**

(51) Int. Cl.[4]: **C 01 B 21/16,** B 01 J 19/12

(21) Anmeldenummer: **81730067.6**

(22) Anmeldetag: **17.07.81**

(54) **Verfahren und Anordnung zur Durchführung des Verfahrens zur photochemischen Spaltung von Wasser und Reduktion von Stickstoff aus der Luft auf der Basis einer Struktur im molekularen Bereich.**

(43) Veröffentlichungstag der Anmeldung:
**26.01.83 Patentblatt 83/4**

(45) Bekanntmachung des Hinweises auf die Patenterteilung:
**02.04.86 Patentblatt 86/14**

(84) Benannte Vertragsstaaten:
**AT CH DE FR GB IT LI NL SE**

(56) Entgegenhaltungen:
**DE - A - 2 654 514**
**DE - A - 2 742 370**

(73) Patentinhaber: **Arbeitsgruppe Technische Photosynthese, Quastenhornweg 14 a, D-1000 Berlin 22 (DE)**

(72) Erfinder: **Radebold, Reinhart, Dr., Quastenhornweg 14a, D-1000 Berlin 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 070 346 B1

**Beschreibung**

Die vorliegende Erfindung betrifft einen Schritt auf dem Weg, den integrierten Baustein der biologischen Photosynthese (Chloroplast) in Struktur und Funktion mit technischen Mitteln soweit möglich und erforderlich nachzubilden und in Form eines Photoreaktors für die technische Photosynthese von Treibstoffen aus Wasser und Luft unter Nutzung konzentrierter Sonnenstrahlung einzusetzen.

Die hier eingeführten Begriffe werden zur Offenlegung der Erfindung im folgenden erläutert:

- Ein Chloroplast ist ein thermodynamisch offenes System mit einer komplexen inneren Struktur und als solches autonomer Teil der Zelle (Zellorganelle) photoautotropher Pflanzen. Die Integrationsdichte der Chloroplasten im grünen Blatt beträgt etwa $10^6$ $mm^{-2}$. Der einzelne Chloroplast besteht aus einer linsenförmigen, für sichtbares Licht transparenten Hülle mit einem Durchmesser von etwa 8000 nm und einer Höhe von etwa 2000 nm*; er enthält, eingebettet in eine Grundsubstanz (Stroma) im wesentlichen folgende Subsysteme (Fig. 1):

(1) die photosynthetisch aktiven, lamellenartigen Zentren, meist in Stapeln angeordnet (Thylakoide)

(2) die Diffusionswege für die Edukte und Produkte der Photosynthese,

(3) Speicher für die kurzfristige Lagerung von Photosyntheseprodukten und Baustoffen (Plastoglobuli),

(4) das genetische Informationsmaterial,

(5) das enzymatische System für die Steuerung des Photosyntheseprozesses.

Das Thylakoid hat eine Schichtdicke von etwa 25 nm und setzt sich aus den kleinsten funktionsfähigen Einheiten der Photosynthese (Quantosomen) zusammen (Fig. 2). Die Quantosomen haben Abmessungen von etwa 10 nm und sind Ausdruck der molekularen mikro-parakristallinen Struktur der Thylakoide, die durch regelmässig angeordnete Moleküle des Chlorophylls und anderer Pigmente gebildet wird. Der Durchmesser des Porphyrin-Ringes des Chlorophyll-Moleküls beträgt etwa 1,5 nm.

- Ein Chloroplast hat die Funktion, elektro-magnetische Energie der Sonnenstrahlung in Form chemischer Energie stofflich zu speichern. Der Prozess wird als Photosynthese bezeichnet und besteht darin, die beiden Edukte Wasser und Kohlendioxid aus der Luft innerhalb der molekularen Struktur der Quantosome in einer Folge miteinander gekoppelter Licht- und Dunkelreaktionen in die beiden Produkte Sauerstoff und Kohlenhydrat umzuwandeln. Die Photosynthese stellt wahrscheinlich die am häufigsten auf der Erde durchgeführte Reaktionsfolge dar; Einzelheiten sind wegen der sehr komplexen Vorgänge dennoch erst zum Teil erforscht. Grundsätzlich wird im Verlauf dieses Prozesses je einem Molekül des Eduktes $H_2O$ (Wasser) je ein Proton und je ein Elektron entzogen, das $H_2O$ also oxidativ gespalten, um beide an das andere Edukt $CO_2$ (Kohlendioxid) anzulagern; das $CO_2$ wird dabei zu dem einen Produkt $CH_2O$ (Kohlenhydrat) reduziert, als zweites Produkt entsteht $O_2$ (Sauerstoff) gemäss der folgenden summarischen Gleichung:

$$\text{(a)}\quad H_2O + CO_2 \underset{\text{Arbeitsleistung}}{\overset{\text{Zufuhr von Lichtenergie}}{\rightleftarrows}} CH_2O + O_2$$

Für die Photosynthese werden 8 Lichtquanten unterschiedlicher Energie und damit unterschiedlicher Wellenlänge im sichtbaren Spektrum der Sonnenstrahlung zwischen etwa 380 nm und 740 nm benötigt, denn sie stellt einen endergonischen, das bedeutet nicht-freiwilligen Prozess dar. Die Quantenenergie findet sich zum Teil in Form der freien Reaktionsenthalpie $\Delta g_R = 110$ kJ der Reaktion (a) wieder; sie kann abgerufen und beispielsweise zur Arbeitsleistung verwendet werden, wenn die Reaktion in umgekehrter Richtung eingeleitet wird. Die Reaktion läuft dann unter Energieabgabe, beispielsweise unter Arbeitsleistung exergonisch, das bedeutet freiwillig ab.

- Viele biologische Systeme waren ursprünglich Vorbild für technische Systeme insbesondere auf den Gebieten der Energieumwandlung, des Transportwesens, der chemischen Technologie, der Informationsübertragung und -verarbeitung. Es versteht sich, dass die technischen Prototypen äusserst primitive Näherungen hinsichtlich Struktur und Funktion sein mussten: Notwendig für die Schaffung eines erfolgreichen Prototyps war es ja, die vielfältigen und komplexen Funktionen des biologischen Vorbildes soweit zu reduzieren, bis es möglich war, mit den zur Verfügung stehenden technischen Mitteln die für die verbleibenden Funktionen erforderliche Struktur zuverlässig aufzubauen.

Die Technik hat im wesentlichen andere Werkstoffe und Fertigungsmethoden entwickelt als sie bei biologischen Systemen anzutreffen sind. Dadurch konnten die Betriebsbedingungen der technischen Nachbildungen biologischer Vorbilder beispielsweise in Hinblick auf Druck und Temperatur, Stromstärke und magnetisches Feld oft um Grössenordnungen erweitert, die Systeme selbst in Hinblick auf Leistung und Abmessungen gesteigert werden. Als Folge liegen die Abmessungen der kleinsten funktionsfähigen Einheiten technischer Systeme (Motoren, Flugzeuge, Computer) im Bereich zwischen 1 m und 100 m.

Die technische Entwicklung hat aber auch erwiesen, dass hier Grenzen bestehen; es kann sogar vorteilhaft sein, im Gegensatz zu der erwähnten Entwicklung, vorhandene technische Systeme in Richtung auf grössere Komplexität zu strukturieren, um vielfältigere und intelligentere Funktionen zu erreichen. Das bedeutet zwangsläufig eine Entwicklung in Richtung auf kleinere

* Zum Vergleich: Das Licht der roten H-Linie des Wasserstoffes beträgt $\lambda = 656$ nm.

Abmessungen und auf grössere Anzahlen der zu integrierenden kleinsten funktionsfähigen Einheiten. Das Beispiel der Mikroelektronik zeigt, dass hier die kleinsten funktionsfähigen Einheiten Abmessungen von 1000 nm und Integrationsdichten von $10^5$ $mm^{-2}$ erreichen werden. Die mit heutigen technischen Mitteln geschaffenen Strukturen für den Elektronentransport und die Ladungstrennung stellen fast molekulare Bereiche dar, denkt man etwa an die Dicke der Raumladungszonen von 30 nm.

Vorschläge, um Wasser durch sichtbares Licht in Wasserstoff und Sauertoff zu zerlegen, sind letztlich Versuche, den Prozess der biologischen Photosynthese mit heutigen technischen Mitteln nachzubilden. Die Entwicklung auf diesem Gebiet sei anhand einiger Beispiele, die den Stand der Technik nicht vollständig wiedergeben können, dargestellt:

- Das System zur technischen Photosynthese mit der einfachsten Struktur ist eine Kombination von Halbleiter-Solarzelle und Elektrolysezelle. Die photoelektrochemische Zelle (Gerischer u.a.) kennzeichnet die Möglichkeit, Elektrolysezelle und Halbleiter miteinander zu integrieren, und zwar dadurch, dass der zu bestrahlende Halbleiter vom n- oder p-Typ gleichzeitig eine der beiden Elektroden bildet (Fig. 3). Bei Bestrahlung mit Quanten ausreichend hoher Energie bilden sich im Halbleiter Elektron-Loch-Paare, die sich separieren und eine Spannung aufbauen. Im Prinzip können die Löcher $H_2O$ oxidieren, die Elektronen an der anderen Elektrode $H_2O$ reduzieren. Da der Bandabstand der verwendeten kovalenten Kristalle zwischen etwa 0,8 eV und 2,2 eV liegt, die inneren Verluste der Anordnung hoch sind, kann eine Elektrolyse nur bei Einstrahlung von UV-Quanten oder bei Anlegen einer Hilfsspannung beobachtet werden.
- Eine Anordnung wie soeben beschrieben ist im Grunde inkonsequent, da die Elektron-Loch-Paar-Erzeugung in einer molekularen Struktur geschieht, während die Elektrolysezelle mit ihren Zu- und Abflüssen, der Gasentnahme und dem Diaphragma als kleinste funktionsfähige Einheit mit Abmessungen nicht unter einigen mm gebaut werden kann. Es wurde daher versucht (Graetzel u.a.), das Konzept der Halbleiter-Elektrode dadurch zu verbessern, dass der Halbleiter in Form von kolloiden Partikeln mit Abmessungen von etwa 100 nm bis 200 nm eine geschützte Oberfläche mit zwei aktiven Zentren von etwa 30 nm Ausdehnung erhält. Die kleinste funktionsfähige Einheit des Halbleiters ist jetzt gleich gross wie die kleinste funktionsfähige Einheit für die Elektrolyse (Fig. 4); beide Strukturen nähern sich dem molekularen Bereich. Das Problem der Photokorrosion wie in der vorhergehenden Anordnung scheint umgangen zu sein.
- Die bisherigen Nachbildungen des biologischen Vorbildes, des Chloroplasten, können die Funktion des Vorbildes in Hinblick auf die Synthese-Reaktion (a) nicht erfüllen. Sie erzeugen neben molekularen Sauerstoff molekularen Wasserstoff praktisch in vollkommener Mischung, nicht aber Wasserstoff in gebundener Form in einer nicht-gasförmigen Phase. Der Grund dafür ist, dass die Photoelektronen und Photolöcher unmittelbar mit dem Edukt Wasser reagieren und es dabei sowohl oxidieren als auch reduzieren.

In einer anderen Annäherung an das biologische Vorbild wurde versucht (Radebold + Seiler), nicht die Struktur vorrangig sondern die Funktion nachzubilden, und zwar durch die photochemische Erzeugung von systeminternen Redox-Paaren zur Oxidation von Wasser und zur Reduktion von Stickstoff in Dunkelreaktionen (Fig. 5). Die Redox-Paare bilden sich in ihrem energiereichen Zustand bei Bestrahlung eines Halbleiters, der aber nicht kovalent, sondern ionisch ist, und der schmelzflüssig vorliegt gelöst in einem Protonendonator. Zwei Konsequenzen sind zu erwähnen, von denen die erste praktische Bedeutung hat, die zweite mehr von theoretischem Interesse ist: Der Ionenkristall hat in der Nähe seines Schmelzpunktes eine grosse Anzahl von Fehlstellen; Photoelektronen können in diesen Fehlstellen eingefangen werden, so dass ein im sichtbaren Bereich absorbierendes neues Photosystem, ein Farb-Zentrum in Form des lokalisierten Elektrons entstanden ist. Das Farb-Zentrum kann unter Aufnahme eines weiteren Elektrons aus einem anderen, angeregten Farb-Zentrum mit dem Protonendonator zu Hydrid reagieren. Auf der anderen Seite dimerisieren sich die beim Photoprozess verbleibenden Radikale, und es entstehen aus den energiereichen Zustand der Redox-Paare zwei stabile Verbindungen, die ähnliche Funktionen wie NADPH und ATP beim biologischen Vorbild haben. Diese Tatsache leitet über zu der zweiten Konsequenz; die vollständige Spaltung von Wasser in diesem Prozess ist auch hier ein Zwei-Photonen-Prozess, wobei aber die Photonen weder simultan noch sukzessive von dem gleichen Molekül, sondern von zwei zunächst unabhängigen, gleichartigen Molekülen absorbiert werden müssen.

Die Reduktion des Stickstoffes mit gleichzeitiger Anlagerung von Protonen zu Hydrazin geschieht in diesem Prozess über die Bildung einer stabilen N-Verbindung der Oxidationsstufe −3, die in einer nächsten Reaktion zu Hydrazin mit der Oxidationsstufe −2 oxidiert wird.

Die hier aufgezeigte Entwicklung von Systemen zur technischen Photosynthese machen deutlich, dass es noch nicht gelungen ist, Struktur und Funktion des biologischen Vorbildes gleichzeitig befriedigend nachzubilden. Auch die letztgenannte Prozessführung setzt konventionelle Reaktoren und Trennkolonnen voraus, und zwar in einem nicht zu unterschätzenden Ausmass. Die kleinste funktionsfähige Einheit hat Abmessungen, die in der Grössenordnung von m liegen dürften. Die Aufgabe der vorliegenden Erfindung ist es, hier einen weiteren Schritt zu tun und auf der Basis des schmelzflüssigen, halbleitenden Alkalioxid-Ionenkristalles eine wirksame Struktur im molekularen Bereich zu schaffen, in

der die gesamte Reaktionsfolge durchgeführt werden kann. Diese Aufgabe wird wie folgt gelöst:

– Eine Alkalioxid-Alkalihydroxid-Schmelze in der Nähe ihres Schmelzpunktes hat eine mikro-parakristalline Struktur. Diese Struktur kommt dadurch zustande, dass das Gitter Verwerfungen zeigt, die sich von Schicht zu Schicht verstärken, bis eine weitere Anlagerung von Gitterbausteinen nur noch zu einem strukturlosen Haufen führen würde. Es wird daher mit dem Aufbau eines neuen Mikro-Parakristalles begonnen (Fig. 6). Die Anzahl der Schichten eines Mikro-Parakristalles lassen sich aus der Stabilitätsbedingung

(b) $N_{max} = (a^*/g)^2$

berechnen, wobei $N_{max}$ die maximal mögliche Anzahl von Netzebenen innerhalb eines Mikro-Parakristalliten, g die relative Fluktuation $\Delta d/\bar{d}$ und $a^*$ eine dimensionslose Grösse ist, die angibt, wann eine weitere Vergrösserung der Domäne durch Kristallisation unmöglich ist. Experimentell wurde $0{,}1 < a^* < 0{,}2$ gefunden. Mit der Schichtdicke d von etwa 0,6 nm für die Schmelze, und für g = 0,04 sowie für $a^*$ = 0,16 folgt $N_{max}$ = 16, die Abmessung des Kristalliten ist D = $N_{max}$ d = 10 nm. Das bedeutet, dass die kleinste funktionsfähige Einheit des heteropolaren Halbleiters etwa die Abmessungen eines Quantosomes hat; sie enthält rund $(N_{max})^3$ = 4000 Gitterbausteine, von denen schätzungsweise 4 bis 40 Fehlstellen sind.

– Der Weg, molekularen Stickstoff zunächst zu spalten, dann in eine Verbindung der Oxidationsstufe –3 zu überführen, also weiter als eigentlich erforderlich zu reduzieren, um dann die N–N-Einfachbindung des Hydrazins durch Oxidation zu bilden, ist ein erheblicher Umweg. Die experimentelle Erfahrung zeigt, dass molekularer Stickstoff in die Fehlstellen der Schmelze diffundieren kann; es findet also eine kurzfristige Fixierung des N≅N-Moleküls statt. Diese Fixierung ist deshalb kurzfristig, weil die Lebensdauer der Mikro-Parakristalliten kurz ist und sie sich in neue Domänen umlagern. Dadurch bedingt können Einschlüsse wie neutrale Moleküle, aber auch wie lokalisierte Elektronen sich in Randbezirken wiederfinden, wo die Möglichkeit der Koagulation wie bekannt besteht. Gemäss der Erfindung wird das N≅N-M Molekül, wenn fixiert, direkt reduziert, und zwar entweder durch Reaktion mit einem angeregten Hydrid-Anion, oder durch Aufnahme von zwei Elektronen, die in einem oder zwei Farb-Zentren lokalisiert, durch Absorption angeregt wurden; das auf diese Weise entstandene $N_2^{2-}$-Anion wird mit einem Proton des Lösungsmittels NaOH reagieren: In beiden Fällen entsteht ein Anion des Di-imins mit der Oxidationsstufe –1:

(c) $H^- \xrightarrow{h\nu} H^{-*}; \; H^{-*} + N_2 \rightarrow [N_2H]^-$

(d) $2\,e^-_{lok} \xrightarrow{h\nu'} 2\,e^{-*}; \; 2\,e^{-*} + N_2 \rightarrow N_2^{2-}; \; N_2^{2-} + H^+ \rightarrow [N_2H]^-$

Di-imin kann sich thermolytisch in Hydrazin und $N_2$ quasi durch Selbsthydrierung umsetzen:

(e) $2\,H{-}N_2{-}H \| H_2N{-}NH_2 + N_2$

– Die hier aufgezeigte Reaktionsfolge ist nur möglich, weil der Halbleiter gebildet aus einem ionischen Mikro-Parakristalliten Fehlstellen besitzt, in denen sich Photoelektronen lokalisieren können. Ein lokalisiertes Elektron stellt ein neues Photosystem dar, das Energie aufnehmen kann. Das Elektron kann aber auch zusammen mit einem zweiten eine unmittelbare Protonenübertragung bewirken, und zwar in einem nahezu exergonischen Prozess:

(f) $2\,e^-_{lok} + H^+ \rightarrow H^-$

Das entstandene Hydrid-Anion ist ebenfalls ein neues Photosystem, dessen Anregung im kurzwelligen Bereich des sichtbaren Spektrums liegt; dieses Photosystem, das ebenfalls zusätzliche Quantenenergie aufnehmen kann, ist eine der Voraussetzungen für die Direktreduktion von $N_2$ gemäss (c). Es existiert jedoch ein weiteres Absorptions-Zentrum in der Schmelze, und zwar in Form des bei dem primären Photoprozess entstehenden zweiten Reaktionsproduktes:

(g) $O\,Na^- \xrightarrow{h\nu} O\,Na + e^-_{lok}; \; 2\,O\,Na \rightarrow NaO{-}O\,Na$

Wenn diese Verbindung angeregt wird, und zwar ebenfalls im kurzwelligen Bereich des sichtbaren Spektrums, kann sie eine an sich endergonische Reaktion ebenfalls mit $N_2$ durchführen, wobei Hyponitrit gebildet wird:

(h) $NaO{-}O\,Na \xrightarrow{h\nu'} NaO{-}O\,Na^*, \; NaO{-}O\,Na^* + N_2 \rightarrow (NaO{-}N)_2$

Man erkennt, dass hier eine tiefliegende Symmetrie bei den Photoreaktionen vorliegt: Das durch den primären Photoprozess gebildete, energiereiche Redox-Paar $e^-_{lok}$+O Na gemäs (g) erzeugt durch die Dimerisierung und durch die Hydrid-Bildung zwei zusätzliche Photosysteme, die zusätzliche Quantenenergie in den Prozessablauf einspeisen, um dann zwei an sich endergonische Folgereaktionen, die Reduktion des $N_2$ nach (c) bzw. (d) und die Oxidation von $N_2$ nach (h) zu ermöglichen.

– Die Auskopplung der eigentlichen Photosyntheseprodukte geschieht, nach dem das Hydrazin nach (e) entstanden ist, und nachdem das Hyponitrit durch thermische Zersetzung:

(i) $(NaO{-}N)_2 \rightarrow NaO{-}Na + N_2O$ oder alternativ
(k) $2(NaO{-}N)_2 \rightarrow 2NaO{-}Na + 2NO + N_2$

in zwei mögliche, gasförmige Sauerstoffträger und das für den primären Photoprozess benötigte $ONa^-$ als den einen Gitterbaustein neben $Na^+$ umgesetzt wurde. Als eigentliche Photoprodukte verlassen den Mikro-Parakristalliten:

Hydrazin $H_2N\text{-}NH_2$, kondensierbar oder als Hydrazid
= flüssiger Wasserstoffträger, Reduktionsmittel

Stickoxid 2NO, gasförmig, aufoxidierbar mit $O_2$,
Di-Stickoxid $N_2O$, gasförmig
= gasförmige Sauerstoffträger, Oxidationsmittel.

- Die Einspeisung der Edukte in die mikro-parakristalline Schmelze geschieht im Falle des $H_2O$ durch Anlagerung überhitzten $H_2O$-Dampfes an das sich aus dem Gasraum im Verlauf des Photoprozesses anreichernde überschüssige NaO-Na, wobei es sich zu NaOH umsetzt; auf diese Weise werden durch eine einfache chemische Reaktion die Protonen des Wassers (zusammen mit den Elektronen) in die Schmelze eingebracht und dabei das $H_2O$ zersetzt.

Die Einspeisung des $N_2$ geschieht wie beschrieben durch Diffusion. Wird Luft verwendet, ist es möglich, dass ein Teil des $O_2$ mit dem entstehenden, im Gasraum über der Schmelze sich sammelnden NO zu $NO_2$ reagiert, was die Kondensation ermöglicht.

- Die summarische Reaktionsgleichung der miteinander gekoppelten Licht- und Dunkelreaktionen ist:

(l) $3\,N_2 + 2\,H_2O \xrightarrow{\Sigma h\nu} N_2H_4 + 2\,N_2O$ alternativ

(m) $2\,N_2 + 2\,H_2O \xrightarrow{\Sigma h\nu} N_2H_4 + 2\,NO$

Die Reaktion ist endergonisch, die freie Reaktionsenthalpie beträgt für beide Varianten in etwa $\Delta\, g_R = 830$ kJ. Der Aufwand an Lichtenergie ergibt sich unter vereinfachenden Annahmen zu:

Summe hv = 1480 kJ

so dass der exergetische Wirkungsgrad dieses Prozesses etwa 0,56 beträgt. Das Schema der Reaktionsfolge zeigt Fig. 7.

Die molare Zusammensetzung der Atmosphäre im Gasraum besteht aus Stickstoff, überhitztem Wasserdampf und auch Sauerstoff; diese Zusammensetzung wird entsprechend den in der Schmelze vorliegenden Bedingungen eingestellt.

Temperatur und Druck im Gasraum werden zeitlich periodisch verändert, um so die Thermolyse von Teilen der Schmelze in die Stickstoff-Wasserstoff-Verbindungen und in die Stickstoff-Sauerstoff-Verbindungen kontrolliert und voneinander getrennt durchführen zu können.

Feuchte Luft wird in den Gasraum als Edukt nach Vorwärmung eingegeben.

Die erstarrte Schmelze wird nach Abkühlen in saurem Medium zur Freisetzung der Stickstoff-Wasserstoff-Verbindungen und der Stickstoff-Sauerstoff-Verbindungen hydrolysiert.

Verzeichnis der Figuren

Fig. 1: Schnitt durch einen Chloroplasten
Fig. 2: Schnitt durch einen Thylakoid
Fig. 3: Photoelektrochemische Zelle
Fig. 4: Photoelektrochemisches Kolloidpartikel
Fig. 5: Flussbild Photoreaktor für Hydrazin-Synthese mit Teilsystemen
Fig. 6: Aufbau eines eindimensionalen Mikroparakristalliten
Fig. 7: Flussbild Photoreaktor für Hydrazin-Synthese mit Mikro-parakristallit als kleinster funktionsfähiger Einheit.

**Patentansprüche**

1. Verfahren zur photochemischen Spaltung von Wasser und Reduktion von Stickstoff aus der Luft auf der Basis des Alkali-Oxid-Photosystems gelöst in schmelzflüssigem Alkali-Hydroxid als Protonenüberträger, dadurch gekennzeichnet, dass die mikro-parakristallinen Bereiche in der Schmelze in der Nähe ihres Schmelzpunktes als kleinste funktionsfähige Einheiten des Photoreaktors mit einem der Gesamtheit aller Einheiten zugehörigen Gasraum verwendet werden, und dass in den Mikro-parakristalliten zwei zusätzliche, intermediäre Photosysteme vorzugsweise auf der Basis von Alkalihydrid und Alkaliperoxid zur Absorption von Lichtenergie geschaffen werden, die im angeregten Zustand mit aus dem Gasraum eindiffundierten molekularen Stickstoff reduktiv und oxidativ reagieren, so dass die erhaltenen Verbindungen thermisch in Stickstoff-Wasserstoff-Verbindungen und in Stickstoff-Sauerstoff-Verbindungen als Endprodukte überführt werden können, wobei die Fehlstellen des Gitters in den mikro-parakristallinen Bereichen mehrfach genutzt werden, und zwar erstens als Gitterplatz für zu lokalisierende Photoelektronen und als Zentrum für die Reaktion mit Protonen, um dadurch das erste intermediäre Photosystem kontrolliert im Gitter zu bilden, während das zweite Photosystem durch Dimerisierung der beim primären Photoprozess entstehenden Radikale entsteht, und zweitens, um molekularen Stickstoff aus dem Gasraum zu fixieren für die direkte Reduktion mit dem ersten angeregten intermediären Photosystem oder für die direkte Oxidation mit dem zweiten angeregten intermediären Photosystem, sowie drittens, um überhitzten Wasserdampf aus dem Gasraum zu fixieren für die Reaktion mit dem im Verlauf des Prozesses überschüssig entstehenden Alkali-Oxid zu Alkali-Hydroxid.

2. Verfahren nach Anspruch 1 dadurch gekennzeichnet, dass die molare Zusammensetzung der Atmosphäre im Gasraum aus Stickstoff, überhitztem Wasserdampf und auch Sauerstoff besteht, und dass diese Zusammensetzung entsprechend den in der Schmelze vorliegenden Bedingungen eingestellt wird.

3. Verfahren nach den Ansprüchen 1 und 2 dadurch gekennzeichnet, dass Temperatur und Druck im Gasraum zeitlich periodisch verändert

werden, um so die Thermolyse von Teilen der Schmelze in die Stickstoff-Wasserstoff-Verbindungen und in die Stickstoff-Sauerstoff-Verbindungen kontrolliert und voneinander getrennt durchführen zu können.

4. Verfahren nach den Ansprüchen 1, 2 und 3 dadurch gekennzeichnet, dass feuchte Luft in den Gasraum als Edukt nach Vorwärmung eingegeben wird.

5. Verfahren nach den Ansprüchen 1, 2, 3 und 4 dadurch gekennzeichnet, dass die erstarrte Schmelze nach Abkühlen in saurem Medium zur Freisetzung der Stickstoff-Wasserstoff-Verbindungen und der Stickstoff-Sauerstoff-Verbindungen hydrolysiert wird.

**Claims**

1. Method and arrangement for execution of the method in the form of a photoreactor for photochemical dissociation of water and reduction of nitrogen from the air on the basis of the alkali-oxide photosystem dissolved in molten alkali hydroxide as proton transfer system, characterized by that the micro-paracrystalline areas in the melt are used near their melting point as smallest operable elements of the photoreactor with a gas area belonging to the total of all elements, and that in the micro-paracrystallites two additional intermediate photosystems preferably on the basis of alkali hydride and alkali peroxide for absorption of the light energy are formed, which react in the excited state with molecular nitrogen diffusing-in from the gas area in reductive and oxidative manner, such that the resulting compounds can be transferred in a thermal way into nitrogen-oxygen compounds as final products, whereby the defects of the lattice in the micro-paracrystalline areas can be used in multiple way, and that is first as lattice location for photoelectrons to be located and as centre for the reaction with protons, in order to form, thus, the first intermediate photosystem in the lattice in a controlled way, while the second photosystem is formed by dimerisation of the radicals resulting from the primary photoprocess, and second, to fix molecular nitrogen from the gas area for the direct reduction with the first excited intermediate photosystem or for the direct oxidation with the second excited intermediate photosystem, and third, to fix overheated water vapour from the gas area for the reaction with the excess alkali oxide being formed during the process to form alkali hydroxide.

2. Method and arrangement according to claim 1, characterized by that the molar composition of the atmosphere in the gas area consists of nitrogen, overheated water vapour and also oxygen, and that this composition is adjusted according to the conditions within the melt.

3. Method and arrangement according to claims 1 and 2, characterized by that temperature and pressure in the gas area are varied periodically, in order to be able to perform the thermolysis of parts of the melt into the nitrogen-oxygen compounds and into the nitrogen-hydrogen compounds in a controlled manner and separated from each other.

4. Method and arrangement according to claims 1, 2 and 3, characterized by that moist air in the gas area is entered as educt after preheating.

5. Method and arrangement according to claims 1, 2, 3, and 4, characterized by that the solidified melt is hydrolysed after cooling-down in acid medium for release of the nitrogen-hydrogen compounds and of the nitrogen-oxygen compounds.

**Revendications**

1. Procédé et dispositif pour la mise en œuvre du procédé sous la forme d'un photoréacteur pour la décomposition photochimique de l'eau et la réduction de l'azote de l'air sur la base du photosystème alcalioxyde dissout dans de l'hydroxyde alcalin en fusion liquide comme transmetteur de protons, caractérisés en ce que les domaines microparacristallins dans la masse en fusion, à proximité de son point de fusion, sont utilisés comme les plus petites unités fonctionnelles du photoréacteur avec un espace gazeux commun à la totalité des unités, et en ce que dans les microparacristallites sont créés deux photosystèmes intermédiaires additionnels, de préférence sur la base d'hydride alcalin et de peroxyde alcalin, pour l'absorbtion d'énergie lumineuse, qui réagissent de façon réductrice et oxydante, à l'état excité, avec l'azote moléculaire diffusant de l'espace gazeux, de telle sorte que les composés obtenus peuvent être transformés thermiquement en composés azote-hydrogène et en composés azote-oxygène comme produits finaux, les lacunes de la grille dans les zones microcristallines étant utilisées de plusieurs manières, premièrement comme endroit de grille pour les protons à localiser et comme centre pour la réaction avec les protons, pour constituer le premier photosystème intermédiaire contrôlé dans la grille, tandis que le second photosystème est produit par dimérisation des radicaux formés dans le photoprocessus primaire, deuxièmement pour fixer l'azote moléculaire de l'espace gazeux pour la réduction directe avec le premier photosystème intermédiaire excité ou pour l'oxydation directe avec le second photosystème intermédiaire excité, et troisièmement pour fixer la vapeur d'eau surchauffée de l'espace gazeux pour la transformation de l'oxyde alcalin produit en excès durant le processus, en hydroxyde alcalin.

2. Procédé et dispositif selon la revendication 1 caractérisés en ce que la composition molaire de l'atmosphère dans l'espace gazeux est constituée d'azote, de vapeurs d'eau surchauffées et d'oxygène, et en ce que cette composition est ajustée en fonction des conditions régnant dans la masse en fusion.

3. Procédé et dispositif selon les revendications 1 et 2, caractérisés en ce que la température et la pression dans l'espace gazeux sont modifiées périodiquement pour pouvoir ainsi exécuter la thermolyse des parties de la masse en fusion en composés azote-hydrogène et en composés azote-oxygène de façon contrôlée et séparément l'une de l'autre.

4. Procédé et dispositif selon les revendications 1, 2 et 3, caractérisés en ce que de l'air humide est introduit dans l'espace gazeux, après préchauffage, en tant que matière première.

5. Procédé et dispositif selon les revendications 1, 2, 3 et 4, caractérisés en ce que la masse en fusion solidifiée est hydraulisée, après refroidissement dans un milieu acide pour la libération des composés azote-hydrogène et des composés azote-oxygène.

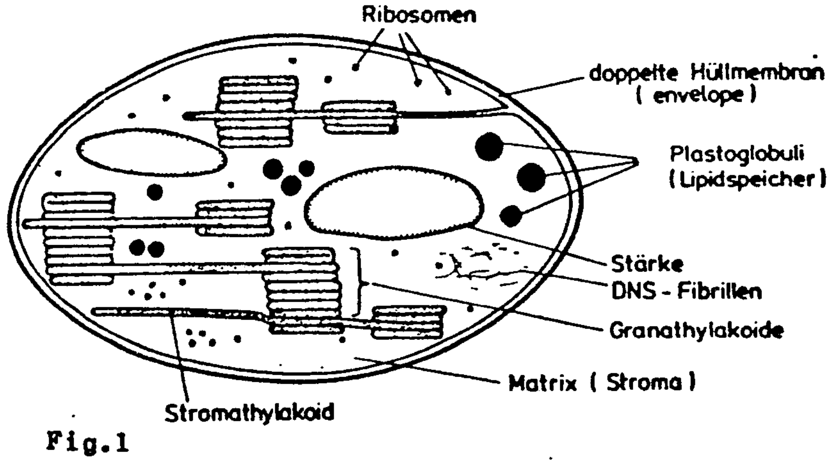


Fig.1

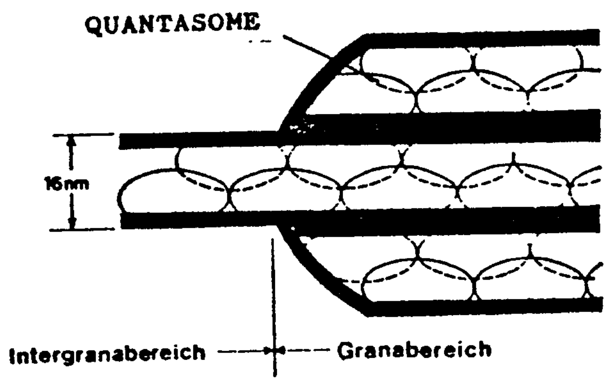


Fig.2

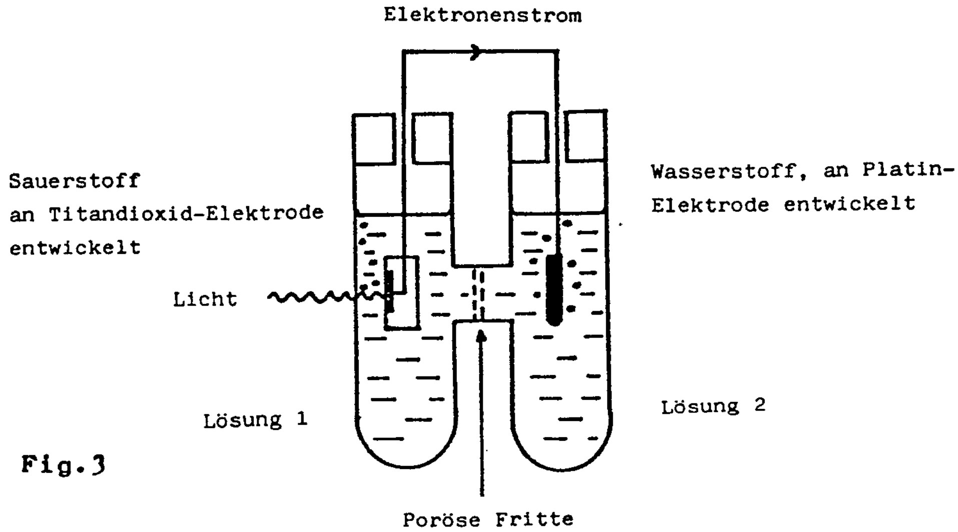


Fig.3

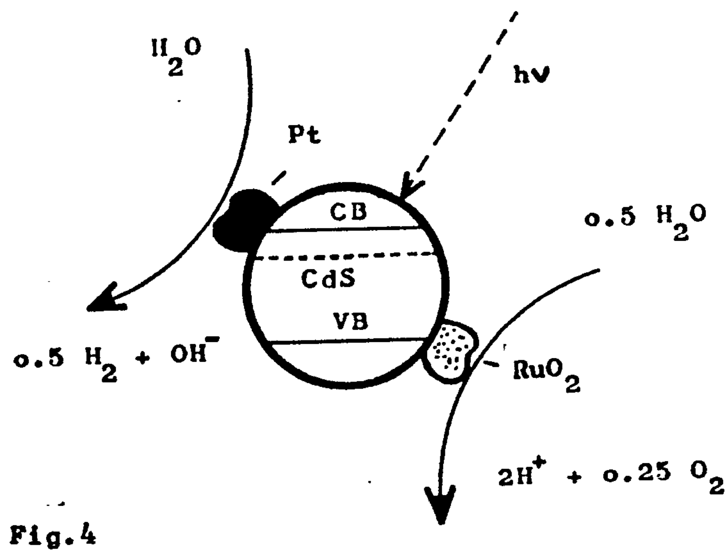

$H_2O$
hν
Pt
CB
CdS
VB
o.5 $H_2O$
o.5 $H_2$ + $OH^-$
$RuO_2$
$2H^+$ + o.25 $O_2$


Fig.4

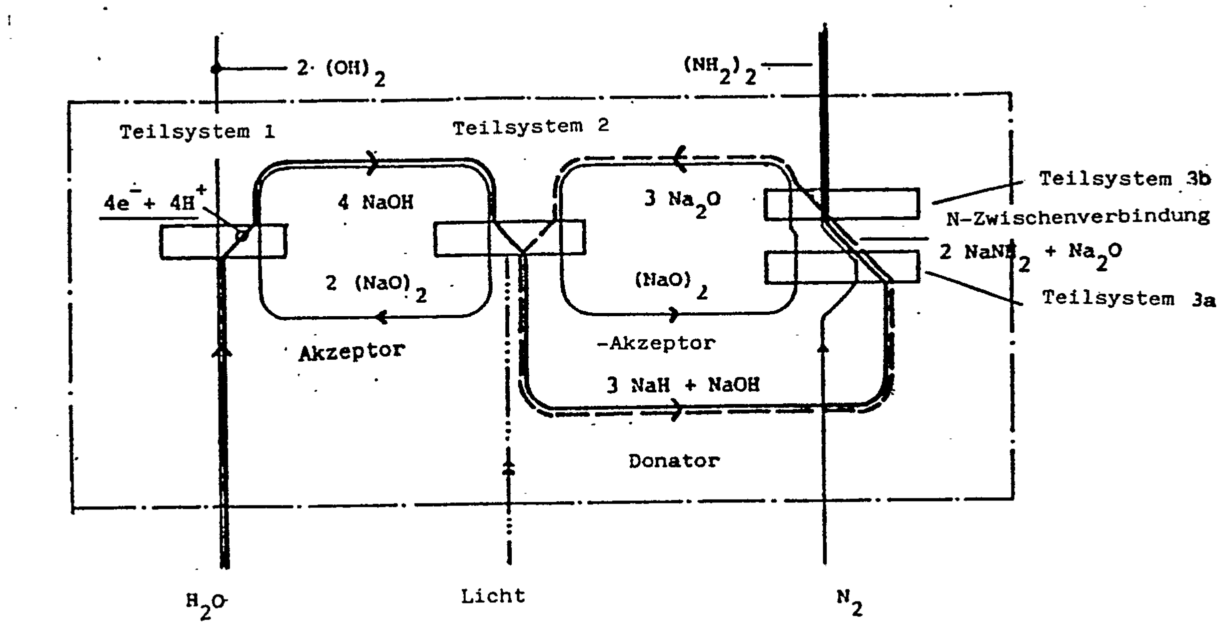

2· $(OH)_2$
$(NH_2)_2$
Teilsystem 1
Teilsystem 2
$4e^-$ + $4H^+$
4 NaOH
2 $(NaO)_2$
Akzeptor
3 $Na_2O$
$(NaO)_2$
-Akzeptor
3 NaH + NaOH
Donator
Teilsystem 3b
N-Zwischenverbindung
2 $NaNH_2$ + $Na_2O$
Teilsystem 3a
$H_2O$
Licht
$N_2$


Fig.5

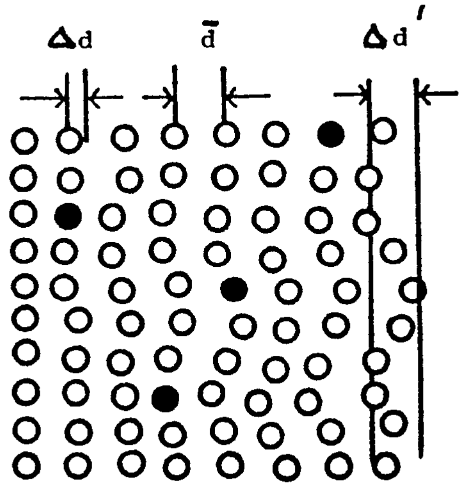


Fig.6'

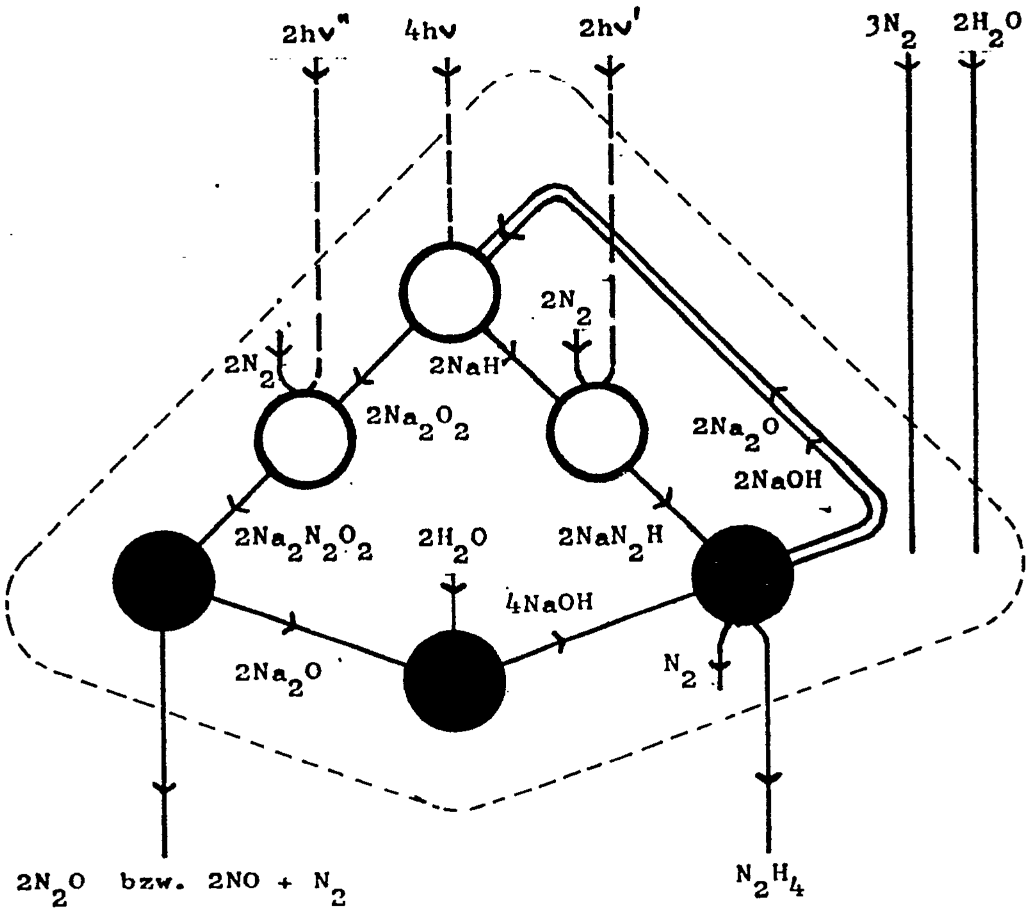


$2N_2O$ bzw. $2NO + N_2$

$N_2H_4$

Fig.7